# FASCICULE DE BREVET EUROPEEN

(11) **EP 3 154 843 B1**
(45) Date de publication et mention de la délivrance du brevet: **15.08.2018**
(21) Numéro de dépôt: 15733831.0
(22) Date de dépôt: 15.06.2015
(51) Int. Cl.: B62D 25/08, B62D 29/00, B60K 11/04

(54) **ASSEMBLAGE D'UN ÉLÉMENT DE STRUCTURE DE VÉHICULE AUTOMOBILE ET D'UN ÉLÉMENT FONCTIONNEL**
ANORDNUNG EINES STRUKTURELEMENTS EINES KRAFTFAHRZEUGS UND FUNKTIONSELEMENT
ASSEMBLY OF A STRUCTURAL ELEMENT OF A MOTOR VEHICLE AND A FUNCTIONAL ELEMENT

(30) Priorité: 16.06.2014 FR 1455497
(43) Date de publication de la demande: 19.04.2017
(73) Titulaire: Renault S.A.S., 92100 Boulogne-Billancourt (FR)
(72) Inventeur: FLANDIN, Michael, F-28410 Broue (FR); AESCHLIMANN, Jean Louis, F-78390 Bois D'arcy (FR); BERTHEVAS, Fabrice, F-91940 Gometz-Le-Chatel (FR)
(86) Numéro de dépôt international: PCT/FR2015/051573
(87) Numéro de publication internationale: WO 2015/193596

(56) Documents cités:
- EP-A1- 1 726 470
- WO-A1-2011/015746
- JP-A- 2005 035 435

## Description

L'invention concerne un assemblage d'un élément de structure de véhicule automobile et d'un élément fonctionnel.

La réalisation d'un véhicule automobile nécessite l'assemblage de nombreux éléments dont des éléments fonctionnels à des éléments de structure du véhicule. De tels assemblages doivent parfois assurer plusieurs fonctions : fixation, absorption des vibrations, possibilité de rupture en cas de choc afin de protéger l'élément fonctionnel.

Notamment, la « face avant technique » (FAT) du véhicule est une structure qui se trouve en avant du bloc moteur et qui a pour fonction de supporter différents organes, principalement le radiateur du bloc moteur. La FAT peut prendre de multiples formes. Dans certains cas, elle se réduit à une ou deux traverses, inférieure et/ou supérieure. Dans d'autres cas, elle constitue un châssis de forme plus ou moins complexe intégrant la valise de refroidissement. La FAT intègre généralement de nombreuses autres fonctions telles que support de butées de capot, support de serrure de capot ou d'un jambage supportant la serrure de capot, etc.

Le radiateur du bloc moteur est généralement fixé à la FAT en partie haute au moyen d'un pion traversant verticalement une poutre supérieure de la FAT et dont l'extrémité est reçue dans un bloc élastomère permettant d'amortir les vibrations et logé dans le radiateur. Le pion traverse ainsi la poutre supérieure par un orifice dont les parois internes forment une partie de guidage, la tête du pion reposant sur les bords de l'orifice. Cette partie de guidage s'étend ainsi sur toute la hauteur de la poutre de guidage, de l'ordre de 35mm. La partie de guidage participe ainsi également à l'amortissement des vibrations en maintenant le pion sur une partie de sa hauteur. Habituellement, la fixation du pion est de type « quart de tour », obtenue par une forme adaptée de l'orifice de la poutre supérieure et du pion. En général, le pion vient ainsi en prise avec la poutre supérieure au niveau de la partie de guidage. Enfin, le pion est sécable pour permettre de préserver le radiateur lors d'un choc frontal. A cet effet, il présente souvent une amorce de rupture située entre le bloc élastomère et la partie de guidage. Ce système de fixation assure un maintien correct du pion tant que la distance entre la poutre supérieure de la FAT et le radiateur est faible. Pour des distances importantes, le pion subit une flexion et un flambage plus importants de sorte que les fonctions qu'il assure, à savoir fixation, filtration des vibrations et sécabilité, peuvent ne plus être garanties. L'assemblage existant engendre donc des contraintes au niveau de l'architecture de la FAT. En outre, la partie de guidage du système de fixation existant est parfois trop courte pour participer de manière efficace à l'absorption des vibrations.

Le document EP 1 726 470 A1 décrit un assemblage d'une poutre supérieure de face avant technique de véhicule automobile et d'un radiateur pourvu de moyens de fixation. L'invention vise à pallier tout ou partie de ces inconvénients en proposant un assemblage d'un élément de structure de véhicule automobile et d'un élément fonctionnel, l'élément structurel étant une poutre supérieure de face avant technique et l'élément fonctionnel étant un radiateur, comprenant :
- une première paroi et une deuxième paroi sensiblement parallèles écartées d'une distance prédéterminée faisant partie dudit élément de structure, chaque paroi étant percée d'un orifice traversant, lesdits orifices étant en regard l'un de l'autre,
- un logement de réception réalisé dans ledit élément fonctionnel et de même axe que les orifices dudit élément de structure, ce logement de réception étant situé à proximité de la deuxième paroi de l'élément de structure,
- un pion traversant les orifices de l'élément de structure, une extrémité libre dudit pion étant reçue et maintenue à l'intérieur du logement de réception, l'autre extrémité du pion présentant une tête élargie en appui contre une face externe de la première paroi de l'élément de structure,
dans lequel les orifices dudit élément de structure sont agencés pour former des moyens de maintien et de fixation dudit pion.

Le pion est ainsi maintenu au niveau de chacune des parois de l'élément de structure qu'il traverse, ce qui permet d'améliorer son maintien. Ainsi, la deuxième paroi étant à proximité du logement de réception, par exemple à une distance prédéterminée, de préférence relativement faible, le pion ne présente pas de longues parties non maintenues transversalement, les risques de flambage et de flexion sont donc réduits, de même que la transmission des vibrations.

En particulier, les moyens de maintien et de fixation peuvent s'étendre en dehors de l'espace séparant les parois de l'élément de structure, autrement dit sur un bord externe desdits orifices, de sorte que la réalisation des orifices dans ces parois s'en trouve simplifiée. Il est en outre possible de réaliser les orifices avec des dimensions réduites, ce qui permet de préserver l'intégrité des parois de l'élément de structure.

De tels moyens de maintien et de fixation sont ainsi disposés sur des faces externes des parois de l'élément de structure, autrement dit des faces qui ne sont pas en regard. Avantageusement, les moyens de maintien et de fixation peuvent définir, autour des orifices, des portions de face externe qui s'étendent perpendiculairement à l'axe des orifices et qui coopèrent avec le pion, pour un meilleur maintien du pion.

D'autres avantages et caractéristiques de l'invention peuvent être considérés isolément ou en combinaison :
- les moyens de fixation dudit pion peuvent être des moyens de fixation quart de tour sans outil, les orifices de l'élément de structure et le pion étant conformés pour être solidarisés suite à une rotation d'un quart de tour du pion. L'assemblage est alors réalisé de manière simple et rapide.
- Le pion peut être sécable et présenter une zone d'amorce de rupture située entre la deuxième paroi de l'élément de structure et le logement de réception dudit élément fonctionnel. Ceci permet de garantir une rupture du pion à l'endroit souhaité dans la mesure où il est maintenu transversalement à proximité de la zone d'amorce de rupture, soit par le logement de réception, soit par l'orifice de la deuxième paroi de l'élément de structure.
- Les parois de l'élément de structure peuvent être des parois faisant partie d'un profilé, par exemple un profilé à section sensiblement en forme de U. ceci peut permettre de réaliser facilement l'élément de structure, lequel peut alors être en outre relativement rigide du fait de la liaison entre les parois. Un profilé en U présente l'avantage d'être léger et résistant.
- Les parois de l'élément de structure peuvent être des parois faisant partie d'un profilé métallique et un habillage en matériau polymère peut recouvrir au moins partiellement une face externe desdites parois autour de leur orifice respectif, ledit habillage formant au moins en partie les moyens de maintien et de fixation dudit pion. Ceci permet de réaliser un élément de structure léger et résistant. En outre, lorsque les parois du profilé ne sont pas strictement parallèles, par exemple du fait du mode de fabrication du profilé, l'habillage permet de réaliser des faces externes strictement parallèles, ce qui peut permettre une meilleure répartition des forces sur le pion et une fixation plus robuste. Des formes complexes peuvent en outre être réalisées dans l'habillage, notamment au niveau des orifices.
- L'habillage en matériau polymère peut être solidarisé auxdites parois par surmoulage, clippage, emboitement ou collage, de préférence par surmoulage.
- Les parois de l'élément de structure peuvent être des parois faisant partie d'un profilé en matériau polymère, lequel peut alors être réalisé de manière simple, par exemple par moulage ou tout autre procédé adapté.
- Le logement de réception dudit élément fonctionnel peut être réalisé dans un bloc en matériau élastomère emboîté dans un logement dudit élément fonctionnel, afin d'amortir les vibrations.

Selon l'invention, l'élément structurel est une poutre supérieure de face avant technique et l'élément fonctionnel est un radiateur.

L'invention concerne également un véhicule automobile comprenant un assemblage selon l'invention.

L'invention est maintenant décrite en référence aux dessins annexés, non limitatifs, dans lesquels :
- la figure 1 est une vue isométrique d'un assemblage selon un mode de réalisation de l'invention, vu de l'intérieur ;
- la figure 2 est une vue isométrique de l'assemblage de la figure 1, vu de l'extérieur ;
- la figure 3 est une vue en coupe de l'assemblage représenté sur les figures 1 et 2 ;
- la figure 4 est une vue en perspective du pion de l'assemblage des figures 1 à 3 ;
- la figure 5 est une vue en perspective de l'élément de structure seul de l'assemblage des figures 1 à 3.

Dans la présente description, les termes avant, arrière, supérieur, inférieur, font référence aux directions avant et arrière du véhicule, lorsque l'assemblage est monté sur le véhicule. Les axes X, Y, Z, correspondent respectivement à l'axe longitudinal (d'avant en arrière), transversal et vertical du véhicule.

Par sensiblement horizontal, longitudinal ou vertical, on entend une direction/un plan formant un angle d'au plus ±20°, voire d'au plus 10° ou d'au plus 5° avec une direction/un plan horizontal, longitudinal ou vertical.

Par sensiblement parallèle, perpendiculaire ou à angle droit, on entend une direction/un angle s'écartant d'au plus ±20°, voire d'au plus 10° ou d'au plus 5° d'une direction parallèle, perpendiculaire ou d'un angle droit.

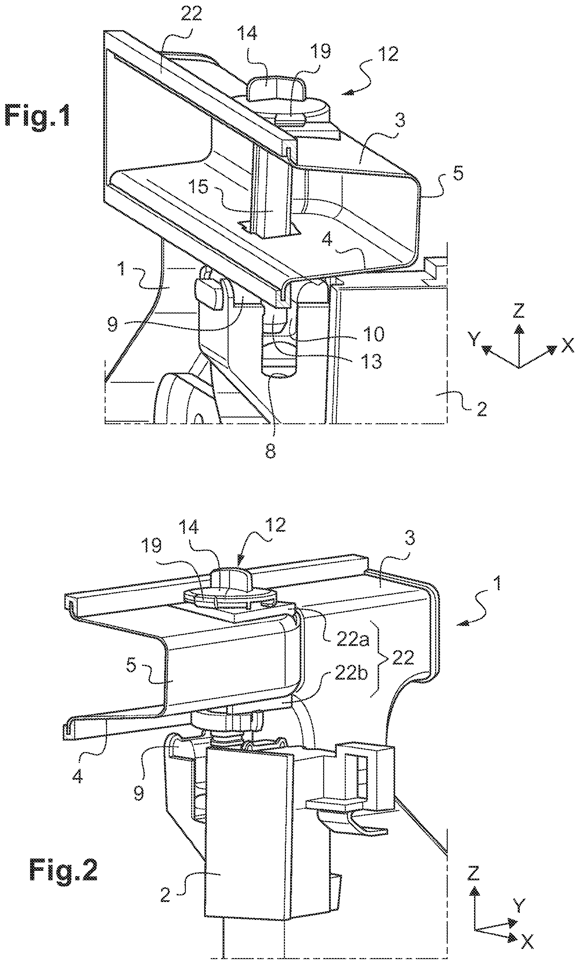

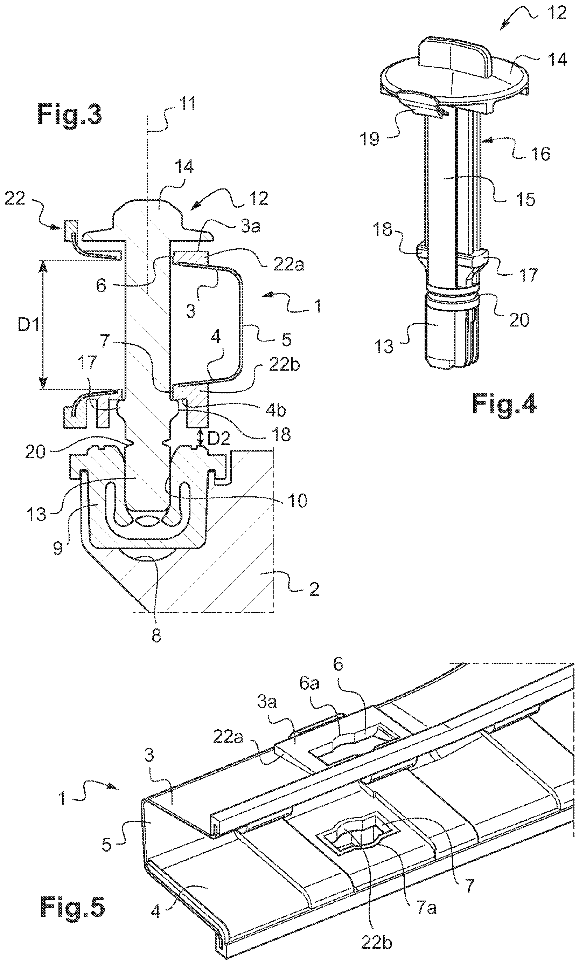

Les figures 1 et 2 représentent l'assemblage d'un élément de structure 1, ici une poutre supérieure de FAT, et d'un élément fonctionnel 2, ici un radiateur. L'élément de structure 1 est représenté seul sur la figure 5.

L'élément de structure 1 comprend deux parois sensiblement parallèles écartées d'une distance prédéterminée D1 (figure 3) : une première paroi 3 supérieure et une deuxième paroi 4 inférieure. Ici, ces parois supérieure et inférieure 3, 4, sont reliées par une paroi 5 sensiblement verticale de sorte que les parois 3, 4, 5 forment un profilé de section sensiblement en forme de U couché. A titre d'exemple la distance D1 peut être de 45 à 60mm.

Tel que plus particulièrement visible sur la figure 5, les parois supérieure 3 et inférieure 4 sont chacune percées d'un orifice traversant 6, 7, respectivement. Ces orifices 6, 7 sont situés en regard l'un de l'autre. Autrement dit, leurs axes sont confondus.

L'élément fonctionnel 2 comporte un logement 8 recevant un bloc élastomère 9 pourvu d'un logement de réception 10 (figure 3). Cet agencement permet une filtration des vibrations entre l'élément de structure 1 et l'élément fonctionnel 2. L'invention n'est toutefois pas limitée à cet agencement et le logement de réception pourrait être directement réalisé dans l'élément fonctionnel 2. L'axe 11 du logement de réception 10 est confondu avec l'axe des orifices 6, 7 de l'élément de structure 2. Tel que visible sur les figures 1 à 3, le logement de réception 10 de l'élément fonctionnel 2 est situé à proximité de la deuxième paroi de l'élément de structure 1, sous celle-ci. A titre d'exemple la distance D2 séparant, suivant la direction de l'axe 11, la paroi inférieure 4, plus précisément l'élément de structure 1, du logement de réception 10 est de 4 à 10mm.

L'assemblage est réalisé par un pion 12 traversant les orifices 6, 7 de l'élément de structure 2. Une extrémité libre 13 de ce pion 12 est reçue et maintenue à l'intérieur du logement de réception 10, son autre extrémité libre présentant une tête 14 élargie en appui contre la première paroi 3 de l'élément de structure 2, sur une face externe de celui-ci. Autrement dit, la tête 14 du pion 12 repose sur une face de la première paroi 3 qui n'est pas en regard de la deuxième paroi 4 (figure 3).

Le pion 12 est maintenu et fixé par les orifices 6, 7 de l'élément de structure 1. A cet effet, les orifices 6, 7 sont agencés pour former des moyens de maintien et de fixation du pion 12, notamment verticalement (parallèlement à l'axe de la tige du pion 12) et transversalement (perpendiculairement à la tige du pion 12). Du fait de l'écartement D1 des parois inférieure 3 et supérieure 4, le pion 12 est ainsi bien maintenu transversalement avec un risque de flambage ou de flexion réduit.

Dans l'exemple représenté, les moyens de maintien et de fixation sont agencés pour une fixation du pion 12 de type « quart de tour » sans outil. Les orifices 6, 7 de l'élément de structure 2 et le pion 12 sont ainsi conformés pour être solidarisés suite à une rotation d'un quart de tour du pion 12 autour de son axe. L'invention n'est toutefois pas limitée à ce type de fixation et un autre type de fixation pourrait être envisagé, par exemple un vissage. Un exemple de réalisation des orifices 6, 7 et du pion 12 permettant une fixation « quart de tour » est décrit ci-après. L'invention n'est toutefois pas limitée à cette réalisation particulière et toute autre forme permettant une fixation « quart de tour » peut être envisagée.

Dans le présent exemple, les orifices 6, 7 présentent ainsi chacun une forme rectangulaire, avec une partie centrale arrondie 6a, 7a légèrement élargie, tel que visible sur la figure 5. Le pion 12 présente quant à lui une tige cylindrique comportant deux méplats 15, 16 opposés et parallèles (figure 4). La partie centrale arrondie élargie 6a, 7a de chaque orifice 6, 7 présente une forme correspondant à un cercle de diamètre égal ou légèrement supérieur au diamètre de la tige cylindrique du pion 12, mais inférieur à la longueur de l'orifice 6, 7. Le pion 12 est en outre pourvu de deux butées 17, 18 diamétralement opposées s'étendant sensiblement perpendiculairement à la tige cylindrique, dans un même plan, et disposées entre les méplats. Ces butées 17, 18, sont conformées pour passer au travers des orifices 6, 7, lorsque le pion 12 est orienté de sorte que ses méplats 15, 16 soient parallèles aux longs côtés des orifices rectangulaires 6, 7. Ainsi, on comprend qu'une rotation du pion 12 d'un quart de tour positionne les butées 17, 18 sous la paroi inférieure 4, dans le sens de la largeur des orifices 6, 7, bloquant ainsi le pion 12 suivant son axe, correspondant alors à l'axe 11 des figures, tel que visible sur la figure 3.

La fixation du pion 12 peut en outre être améliorée par la réalisation de deux languettes 19 diamétralement opposées solidaires d'une face inférieure de la tête 14 et dirigées vers la tige du pion 12 (dont une seule est visible sur la figure 4), qui peuvent venir en prise avec le bord de l'orifice supérieur 6 après rotation du pion 12, c'est-à-dire dans une position assemblée du pion 12. Dans l'exemple représenté, les parois 3, 4 présentent en outre autour des orifices 6, 7 respectivement, des portions de face externe 3a, 4a qui s'étendent perpendiculairement à l'axe 11 des orifices 6, 7. Les butées 17, 18 du pion 12 sont ainsi en appui plan sur la portion de face externe 4b inférieure, alors que les languettes 19 peuvent venir en appui contre le bord de l'orifice 6, sensiblement au niveau de la portion de face externe supérieure 3a. De cette manière, le maintien du pion 12 suivant son axe est amélioré.

Dans le présent exemple, le pion 12 comprend en outre une zone d'amorce de rupture 20, ici une gorge formant une section rétrécie, disposée entre les butées 17, 18 et la partie de son extrémité libre 13 insérée dans le logement de réception 10, tel que visible sur la figure 3. L'amorce de rupture 20 est ainsi disposée à faible distance de deux zones de maintien du pion 12 : l'orifice 7 de la paroi inférieure 4 de l'élément de structure 1 et le logement de réception 10 de l'élément fonctionnel 2. Ainsi, un choc provoquant un déplacement de l'élément de structure 1 vers l'arrière du véhicule suivant la direction X transversale à l'axe du pion 12, va engendrer de manière certaine une rupture du pion 12 au niveau de son amorce de rupture 20.

Dans le mode de réalisation décrit en référence aux figures, les parois 3, 4 de l'élément de structure 1 font partie d'un profilé métallique à section en U, recouvert partiellement d'un habillage 22 en matériau polymère. Plus particulièrement, cet habillage 22 recouvre partiellement les faces externes des parois supérieure 3 et inférieure 4 autour de leur orifice respectif, 6, 7. Dans l'exemple représenté, cet habillage 22 ne s'étend pas sur toute la surface externe du profilé, mais comprend un habillage 22a supérieur autour de l'orifice 6 et un habillage 22b inférieur autour de l'orifice 7. Ces habillages supérieur 22a et inférieur 22b sont sur des faces externes des parois inférieure 3 et supérieure 4, respectivement, autrement dit sur des faces qui ne sont pas en regard, tel que visible plus particulièrement sur la figure 3. Autrement dit, ces habillages 22a et 22b ne s'étendent pas entre les parois 3 et 4. Ce positionnement présente de nombreux avantages, notamment lorsque cet habillage 22 est réalisé par surmoulage. En effet, dans ce cas, il n'est pas nécessaire de surdimensionner les orifices 6 et 7 du profilé métallique pour permettre le passage d'éléments de moule pour la réalisation de l'habillage 22 car celui-ci est externe au profilé métallique. Ainsi, les orifices 6, 7 peuvent être dimensionnés au juste nécessaire. Ceci permet notamment de limiter la fragilisation du profilé métallique potentiellement induite par la présence des orifices. Ces avantages sont également observés pour un élément de structure réalisé d'une pièce en matériau polymère, autrement dit dont le profilé et l'habillage forment une seule et même pièce en matériau polymère.

L'habillage 22 est ici surmoulé sur le profilé métallique, ce qui permet une réalisation relativement simple en grande série, sans montage ultérieur. On peut toutefois envisager d'autres modes d'assemblage de l'habillage 22, par exemple par collage, clippage ou autre.

En outre, dans le cas d'un profilé métallique, pour des raisons de simplification du procédé de fabrication du profilé, les parois 3, 4 du profilé peuvent ne pas être strictement parallèles tel que visible sur les figures. Dans ce cas, un habillage 22 externe permet de réaliser des portions de face externe 3a, 4a qui s'étendent perpendiculairement à l'axe 11 des orifices 6, 7 et qui peuvent faire partie des moyens de maintien et de fixation au sens de la présente invention, ce qui est préférable pour le blocage et le maintien du pion 12 suivant son axe. On notera que de telles portions de face externe 3a, 4a qui s'étendent perpendiculairement à l'axe 11 peuvent également être facilement obtenues en réalisant un élément de structure entièrement en matériau polymère.

A titre d'exemple, le matériau polymère pouvant être réalisé pour l'habillage ou le profilé peut être du polypropylène, éventuellement renforcé, ou tout autre matériau polymère présentant la rigidité recherchée. Lorsqu'il est métallique, le profilé peut être en aluminium, en alliage à base d'aluminium ou en acier, notamment en acier inoxydable.

Dans l'exemple décrit, l'élément de structure se présente sous la forme d'un profilé à section sensiblement en U. L'invention n'est toutefois pas limitée à ce type de section, et une section semblable à un H ou un I est envisageable pourvu qu'elle présente deux parois sensiblement parallèles pouvant être percées pour recevoir un pion, tel que décrit plus haut.

## Revendications

1. Assemblage d'un élément de structure (1) de véhicule automobile et d'un élément fonctionnel (2), l'élément structurel (1) étant une poutre supérieure de face avant technique et l'élément fonctionnel (2) étant un radiateur, **caractérisé en ce qu'**il comprend :
- une première paroi (3) et une deuxième paroi (4) sensiblement parallèles écartées d'une distance prédéterminée (D1) faisant partie dudit élément de structure (1), chaque paroi (3, 4) étant percée d'un orifice traversant (6, 7), lesdits orifices (6, 7) étant en regard l'un de l'autre,
- un logement de réception (10) réalisé dans ledit élément fonctionnel (2) et de même axe que les orifices (6, 7) dudit élément de structure (1), ce logement de réception (10) étant situé à proximité de la deuxième paroi (4) de l'élément de structure (1),
- un pion (12) traversant les orifices (6, 7) de l'élément de structure (1), une extrémité libre (13) dudit pion (12) étant reçue et maintenue à l'intérieur du logement de réception (10), l'autre extrémité du pion (12) présentant une tête élargie (14) en appui contre une face externe de la première paroi (3) de l'élément de structure (1),
dans lequel les orifices (6, 7) dudit élément de structure (1) sont agencés pour former des moyens de maintien et de fixation dudit pion (12).

2. Assemblage selon la revendication 1, **caractérisé en ce que** les moyens de maintien et de fixation dudit pion (12) s'étendent en dehors de l'espace séparant les parois (3, 4) de l'élément de structure (12).

3. Assemblage selon l'une quelconque des revendications 1 ou 2, **caractérisé en ce que** les moyens de maintien et de fixation peuvent définir, autour des orifices (6, 7), des portions de face externe (3a, 4a) qui s'étendent perpendiculairement à l'axe (11) des orifices (6, 7) et qui coopèrent avec le pion (12).

4. Assemblage selon l'une quelconque des revendications 1 à 3, **caractérisé en ce que** le pion (12) est sécable et présente une zone (20) d'amorce de rupture située entre la deuxième paroi (4) de l'élément de structure (1) et le logement de réception (10) dudit élément fonctionnel (2).

5. Assemblage selon l'une quelconque des revendications 1 à 4, **caractérisé en ce que** les parois (3, 4) de l'élément de structure (1) sont des parois faisant partie d'un profilé, par exemple à section sensiblement en forme de U.

6. Assemblage selon l'une quelconque des revendications 1 à 5, **caractérisé en ce que** les parois (3, 4) de l'élément de structure (1) sont des parois faisant partie d'un profilé métallique et **en ce qu'**un habillage (22) en matériau polymère recouvre au moins partiellement une face externe desdites parois (3, 4) autour de leur orifice respectif (6, 7), ledit habillage (22) formant au moins en partie les moyens de maintien et de fixation dudit pion (12).

7. Assemblage selon la revendication 6, **caractérisé en ce que** ledit habillage (22) en matériau polymère est solidarisé auxdites parois (3, 4) par surmoulage, clippage, emboitement ou collage.

8. Assemblage selon l'une quelconque des revendications 1 à 5, **caractérisé en ce que** les parois (3, 4) de l'élément de structure font partie d'un profilé en matériau polymère.

9. Véhicule automobile comprenant un assemblage selon l'une quelconque des revendications 1 à 8.

## Patentansprüche

1. Zusammenbau eines Kraftfahrzeug-Strukturelements (1) und eines Funktionselements (2), wobei das Strukturelement (1) ein oberer Träger des Frontendmoduls und das Funktionselement (2) ein Kühler ist, **dadurch gekennzeichnet, dass** er enthält:
- eine erste Wand (3) und eine zweite Wand (4), im Wesentlichen parallel, um einen vorbestimmten Abstand (D1) voneinander entfernt, die Teil des Strukturelements (1) sind, wobei jede Wand (3, 4) mit einer Durchgangsöffnung (6, 7) versehen ist, wobei die Öffnungen (6, 7) einander gegenüberliegen,
- einen Aufnahmesitz (10), der im Funktionselement (2) hergestellt ist und die gleiche Achse wie die Öffnungen (6, 7) des Strukturelements (1) hat, wobei dieser Aufnahmesitz (10) sich in der Nähe der zweiten Wand (4) des Strukturelements (1) befindet,
- einen die Öffnungen (6, 7) des Strukturelements (1) durchquerenden Flachstift (12), wobei ein freies Ende (13) des Flachstifts (12) im Inneren des Aufnahmesitz (10) aufgenommen und gehalten wird, wobei das andere Ende des Flachstifts (12) einen verbreiterten Kopf (14) in Auflage gegen eine Außenseite der ersten Wand (3) des Strukturelements (1) aufweist,
wobei die Öffnungen (6, 7) des Strukturelements (1) eingerichtet sind, um Halte- und Befestigungseinrichtungen des Flachstifts (12) zu bilden.

2. Zusammenbau nach Anspruch 1, **dadurch gekennzeichnet, dass** die Halte- und Befestigungseinrichtungen des Flachstifts (12) sich außerhalb des Raums erstrecken, der die Wände (3, 4) des Strukturelements (12) trennt.

3. Zusammenbau nach einem der Ansprüche 1 oder 2, **dadurch gekennzeichnet, dass** die Halte- und Befestigungseinrichtungen um die Öffnungen (6, 7) herum Außenseitenabschnitte (3a, 4a) definieren können, die sich lotrecht zur Achse (11) der Öffnungen (6, 7) erstrecken und die mit dem Flachstift (12) zusammenwirken.

4. Zusammenbau nach einem der Ansprüche 1 bis 3, **dadurch gekennzeichnet, dass** der Flachstift (12) teilbar ist und einen Sollbruchstellenbereich (20) aufweist, der sich zwischen der zweiten Wand (4) des Strukturelements (1) und dem Aufnahmesitz (10) des Funktionselements (2) befindet.

5. Zusammenbau nach einem der Ansprüche 1 bis 4, **dadurch gekennzeichnet, dass** die Wände (3, 4) des Strukturelements (1) Wände sind, die Teil eines Profilteils sind, zum Beispiel mit einem im Wesentlichen U-förmigen Querschnitt.

6. Zusammenbau nach einem der Ansprüche 1 bis 5, **dadurch gekennzeichnet, dass** die Wände (3, 4) des Strukturelements (1) Wände sind, die Teil eines metallischen Profilteils sind, und dass eine Verkleidung (22) aus Polymermaterial eine Außenseite der Wände (3, 4) um ihre jeweilige Öffnung (6, 7) herum zumindest teilweise bedeckt, wobei die Verkleidung (22) zumindest zum Teil die Halte- und Befestigungseinrichtungen des Flachstifts (12) bildet.

7. Zusammenbau nach Anspruch 6, **dadurch gekennzeichnet, dass** die Verkleidung (22) aus Polymermaterial durch Überformen, Einklinken, Ineinanderstecken oder Kleben fest mit den Wänden (3, 4) verbunden ist.

8. Zusammenbau nach einem der Ansprüche 1 bis 5, **dadurch gekennzeichnet, dass** die Wände (3, 4) des Strukturelements Teil eines Profilteils aus Polymermaterial sind.

9. Kraftfahrzeug, das einen Zusammenbau nach einem der Ansprüche 1 bis 8 enthält.

## Claims

1. Assembly of a structural element (1) of a motor vehicle and a functional element (2), the structural element (1) being an upper member of the technical front face and the functional element (2) being a radiator, **characterized in that** it comprises:
- a first wall (3) and a second wall (4) which are substantially parallel and separated by a predetermined distance (D1) forming part of said structural element (1), each wall (3, 4) being perforated by a through-hole (6, 7), said holes (6, 7) being opposite each other,
- a receiving housing (10) produced in said functional element (2) and having the same axis as the holes (6, 7) of said structural element (1), said receiving housing (10) being located in the vicinity of the second wall (4) of the structural element (1),
- a pin (12) passing through the holes (6, 7) of the structural element (1), a free end (13) of said pin (12) being received and held inside the receiving housing (10), the other end of the pin (12) having an enlarged head (14) bearing against an outer face of the first wall (3) of the structural element (1),
in which the holes (6, 7) of said structural element (1) are arranged so as to form means for holding and fastening said pin (12).

2. Assembly according to Claim 1, **characterized in that** the means for holding and fastening said pin (12) extend outside the space separating the walls (3, 4) of the structural element (12).

3. Assembly according to either one of Claims 1 and 2, **characterized in that** the means for holding and fastening may define, around the holes (6, 7), outer face portions (3a, 4a) which extend perpendicular to the axis (11) of the holes (6, 7) and which cooperate with the pin (12).

4. Assembly according to any one of Claims 1 to 3, **characterized in that** the pin (12) is able to be separated and has an incipient fracture zone (20) located between the second wall (4) of the structural element (1) and the receiving housing (10) of said functional element (2).

5. Assembly according to any one of Claims 1 to 4, **characterized in that** the walls (3, 4) of the structural element (1) are walls forming part of a profile, for example of substantially U-shaped section.

6. Assembly according to any one of Claims 1 to 5, **characterized in that** the walls (3, 4) of the structural element (1) are walls forming part of a metal profile and **in that** a trim part (22) made of polymer material at least partially covers an outer face of said walls (3, 4) around the respective hole (6, 7) thereof, said trim part (22) at least partially forming the means for holding and fastening said pin (12) .

7. Assembly according to Claim 6, **characterized in that** said trim part (22) made of polymer material is fixed to said walls (3, 4) by overmolding, clipping, nesting or bonding.

8. Assembly according to any one of Claims 1 to 5, **characterized in that** the walls (3, 4) of the structural element form part of a profile made of polymer material.

9. Motor vehicle comprising an assembly according to any one of Claims 1 to 8.
